# EUROPÄISCHE PATENTANMELDUNG

(11) **EP 0 563 977 A2**
(43) Veröffentlichungstag der Anmeldung: **06.10.1993**
(21) Anmeldenummer: 93105457.1
(22) Anmeldetag: 02.04.1993
(51) Int. Cl.: C09D 103/02, E04F 13/00, D21H 19/54, D06N 7/00

(54) **Verfahren zum Herstellen dreidimensional oberflächenstrukturierter Beläge für Wand- und Bodenflächen und Strukturpaste dafür**

(30) Priorität: 02.04.1992 DE 4210922; 22.12.1992 EP 92121757
(71) Anmelder: MARBURGER TAPETENFABRIK J.B. SCHAEFER GMBH & CO. KG, D-35274 Kirchhain (DE)
(72) Erfinder: Petridis, Dimitrios, W-3575 Kirchhain 1 (DE)
(74) Vertreter: Fuchs, Luderschmidt & Partner Patentanwälte

(57) **Zusammenfassung**

Beschrieben ist ein Verfahren zum Herstellen von Strukturtapeten, bei dem eine Strukturpaste verwendet wird, die unverkleisterte Stärke als organischen Füllstoff enthält. Außerdem enthält die Strukturpaste neben Wasser als Viskositätseinstellmittel noch eine PVC- und weichmacherfreie Polymerdispersion und anorganische Füllstoffe. Der Strukturpaste können darüber hinaus noch nicht kristallisierender Sorbitsirup, Ethylenglykol und/oder Propylenglykol als Verarbeitungsverzögerungsmittel, Paraffindispersion als Hydrophobiermittel sowie Mikroperlen und/oder Mikrohohlkugeln zur Erhöhung des spezifischen Volumens zugesetzt sein.

## Beschreibung

Die Erfindung betrifft ein Verfahren zum Herstellen dreidimensional oberflächenstrukturierter Beläge für Wand- und Bodenflächen, insbesondere zum Herstellen von Strukturtapeten nach dem Oberbegriff des Patentanspruches 1. Die Erfindung betrifft ferner eine Strukturpaste zur Verwendung bei dieser Herstellung.

Fußbodenbeläge, Wandbeläge und insbesondere Tapeten mit einer strukturierten, reliefartigen Oberfläche sind bekannt. Zur Herstellung der reliefartigen Strukturen werden bei bekannten Verfahren entweder treibmittelfreie Kompaktplastisole oder treibmittelhaltige Schaumplastisole jeweils auf der Basis von Polyvinylchlorid (PVC) verwendet, die einen bestimmten Anteil an anorganischen Füllstoffen, wie z.B. Alumiuniumhydroxid (Al(OH)₃) und Calciumcarbonat (CaCO₃) aufweisen.

Die Plastisolpaste wird je nach Art der zu erzeugenden Struktur mittels bekannter Auftragsverfahren, insbesondere Druckverfahren, auf eine geeignete Substratbahn aufgetragen die aus unterschiedlichen Materialien, insbesondere Kunststoffmaterialien bestehen kann, im Fall von Strukturtapeten aber in überwiegendem Maße ein Tapetenrohpapier ist. Geeignete Verfahren für den Auftrag sind das Rotations-Siebdruckverfahren, das Flach-Siebdruckverfahren, das Rotations-Tiefdruckverfahren, das Quetschtiefdruckverfahren, Hochdruckverfahren, Streichverfahren und Spritzverfahren.

Es ist bekannt, daß Stärke, insbesondere Kartoffelstärke, in verkleistertem bzw. aufgeschlossenem Zustand in verschiedenen Gebieten Anwendung findet. Zu nennen sind unter anderem, die Verwendung als Stärkeleim und Kleister in der Klebstoffindustrie, die Verwendung als Bindemittel für Druckfarben, Beschichtungen, Lacke usw. in der Lack- und Druckfarbenindustrie und die Verwendung als Schlicht- und Appreturmasse in der Textilindustrie.

Der Erfindung liegt die Aufgabe zugrunde, ein Verfahren zum Herstellen dreidimensional oberflächenstrukturierter Beläge für Wand-, Decken- und Bodenflächen zu schaffen, bei dem Strukturierungspasten eingesetzt werden, die neben den bekannten anorganischen Füllstoffen einen organischen Bestandteil als Füllstoff enthalten, der biologisch leicht abbaubar ist, sich problemlos nach den bisher üblichen Auftragsverfahren verarbeiten lassen und zu hoher Erzeugnisqualität führen. Aufgabe der Erfindung ist ferner die Bereitstellung einer besonderen Strukturpaste für das Herstellen von oberflächenstrukturierten Belägen, die neben den bekannten anorganischen Füllstoffen einen organischen Bestandteil als Füllstoff enthält, der biologisch leicht abbaubar ist.

Verfahrensmäßig wird diese Aufgabe erfindungsgemäß grundsätzlich durch die kennzeichnenden Merkmale des Patentanspruches 1 gelöst. Eine geeignete Strukturpaste ist grundsätzlich durch den Patentanspruch 8 gekennzeichnet.

Im folgenden wird die Erfindung der Einfachheit halber nur in ihrer Anwendung auf die Herstellung von Strukturtapeten beschrieben, wobei dem Fachmann klar ist, daß das beschriebene Herstellungsverfahren ebenso auf andere strukturierte Gegenstände anwendbar und somit insbesondere auch für die Herstellung anderer Wand- und Bodenbeläge geeignet ist. Auch ist das Substrat keinesfalls auf das bei der Herstellung von Strukturtapeten üblicherweise verwendete Tapetenrohpapier beschränkt. Das Substrat kann aus unterschiedlichsten Materialien bestehen, insbesondere können für die Herstellung von Strukturtapeten auch in geeigneter Weise vorbeschichtete Tapetenrohpapiere zum Einsatz kommen. Darüber hinaus kann die Strukturpaste auch zum Beschichten von Druckträgern Verwendung finden. Geeignete Druckträger sind beispielsweise Papiere, Kunststoffvliese, Glasvliese und Gewebe.

Es wurde in eingehenden Versuchen ermittelt, daß qualitativ hochwertige Strukturoberflächen unter Verwendung von Strukturpasten erhalten werden können, die unverkleisterte Stärke, insbesondere Kartoffelstärke, als organischen Füllstoff in wasserverdünnbaren Pasten enthalten. Das wässrige System hat den Vorteil, daß die Strukturpasten durch einfaches Trocknen bzw. Eindampfen verfestigt werden können, wobei keine schädlichen Abdämpfe entstehen. Die Trocknung kann bei Temperaturen zwischen 40 und 200°C erfolgen, was gegenüber der Verwendung von herkömmlichen PVC-Plastisolen einen weiteren Vorteil bedeutet.

Auch die erfindungsgemäße Strukturpaste läßt sich nach den eingangs erwähnten, üblichen Auftragsverfahren verarbeiten. Eine weitere Oberflächenveredlung der verfestigten Strukturen, beispielsweise durch Bedrucken, Lackieren, Beflocken oder dergl. ist ohne weiteres möglich.

Die unverkleisterte Stärke, vorzugsweise Kartoffelstärke, als organischer Füllstoff in Strukturpasten bringt gegenüber den üblichen Füllstoffen enorme Vorteile. Die unverkleisterte Stärke weist ein gutes Füllvermögen auf. Die unverkleisterte Stärke bildet mit den anorganischen Füllstoffen eine Einheit, egal ob die anorganischen Füllstoffe Aluminiumhydroxide oder Calciumcarbonate sind und kann deshalb als teilweiser Ersatz von anorganischen Füllstoffen angesehen werden. Aufgrund des relativ niedrigen spezifischen Gewichtes von 1,2 g/cm³ gegenüber von 2,7 g/cm³ bei Calciumcarbonat, erhält man eine voluminöse Strukturpaste mit niedrigem, spezifischem Gewicht.

Ferner ist die Stärke biologisch leicht und vollständig abbaubar, was sich auf die Abbaubarkeit der Strukturpaste positiv auswirkt.

Die unverkleisterten Partikel der Stärke lassen sich sehr leicht in das vorhandene Wasser der Rezeptur eindispergieren, sind aber in Kaltwasser unlöslich und werden erst mit steigender Temperatur angelöst. Diese Eigenschaften bringen produktionstechnische Vorteile. Die Trocknungstemperatur und Trocknungsdauer kann so gewählt werden, daß die Stärkepartikelchen an ihrer Oberfläche durch die Temperatur und die Wasserfeuchtigkeit der Rezeptur leicht angelöst werden und sich miteinander und mit den anderen Füllstoffen zu einer Einheit verbinden. Dadurch erhält man eine bessere Festigkeit der Strukturmasse.

Zusätzlich bindet die Stärke durch Anquellen der Stärkepartikel einen erheblichen Anteil des Wassers und gibt dieses beim Trocknen langsam ab. Dadurch wird ein rasches Verdunsten, was zur Blasenbildung führen könnte, verhindert.

Durch das Anquellen der Stärke tritt, ohne Zugabe von Treibmitteln, eine Volumenvergroßerung auf.

Als unverkleisterte Stärke ist jedoch nicht nur die Kartoffelstärke geeignet. Verwendet werden können auch Roggen-, Reis- und Maisstärke. Selbst bestimmte Stärkederivate sind einsetzbar.

Die Gesamtfüllstoffe enthalten zweckmäßigerweise mindestens 10 Gew.-%, vorzugsweise jedoch 20-70 Gew. -% unverkleisterte Stärke als organischen Füllstoff. Die unverkleisterte Stärke liegt in Pulverform vor, vorzugsweise mit einer Korngröße von 10-100 µm.

Als Polymerdispersionen geeignet für die erfindungsgemäße Strukturpaste sind PVC- und weichmacherfreie Polymerdispersionen. Als bevorzugt geeignet für die erfindungsgemäße Strukturpaste haben sich Polymerdispersionen auf der Basis von Vinylacetat-Ethylen-Copolymerisaten (EVA), Acrylat-Styrol-Copolymerisaten und Acrylat-Polymerisaten erwiesen, die als 45 bis 55 %ige, weichmacherfreie Dispersionen eines Polymerisates oder eines Gemisches von Polymerisaten in Wasser erhältlich sind. Diese Dispersionen führen zu guten Fließeigenschaften der Strukturpaste, sie gewährleisten eine ausreichende Bindung der anderen Komponenten der Paste untereinander, weisen eine gute Adhäsion zum Substrat auf und führen nach dem Trocknen zu einer dauerflexiblen Struktur.

Es haben sich aber auch andere Polymerdispersionen, beispielsweise auf der Basis von Vinylacetat-maleinsäuredi-n-butylester und Vinylacetat-acrylsäureester als geeignet erwiesen.

Eine grundsätzliche Zusammensetzung der erfindungsgemäßen Strukturmasse kann darin bestehen, daß sie auf 1 Gewichtsteil anorganische und/oder organische Füllstoffe 0,7-2,0 Gewichtsteile einer 45-55 %igen Polymerdispersion enthält.

Als anorganischer Füllstoff für die Strukturmasse kommt vornehmlich Aluminiumhydroxid (Al(OH)₃) in Betracht. Das Aluminiumhydroxid kann aber auch ganz oder teilweise durch Calciumcarbonat (CaCO₃) substituiert werden. Es kann aber auch ein gewisser Zusatz von Titandioxid (TiO₂) als zusätzliches Weißpigment von Vorteil sein. Der Einsatz von Titandioxid kann bis zu 10 Gew. -% der gesamten anorganischen und/oder organischen Füllstoffe betragen.

Das Aluminiumhydroxid als Füllstoff wird vorzugsweise mit einer Korngröße von 10-25 µm eingesetzt. Bei Titandioxid kommt vorzugsweise die Rutil-Modifikation zum Einsatz. Das Calciumcarbonat ist vorzugsweise ein solches mit einer Korngrößenverteilung von 5-30 µm und weist eine Ölzahl von 15 auf. Abweichungen von den vorstehenden Füllstoffspezifikationen sind aber möglich.

Desweiteren hat es sich als äußerst vorteilhaft erwiesen, dem System eine gewisse Menge an einem organischen Verarbeitungsverzögerer zuzufügen. Es wurde gefunden, daß der Zusatz von 1-8 Gew.-% nicht kristallisierendem Sorbitsirup, bezogen auf die Gesamtpaste, für deren Verarbeitung sehr vorteilhaft ist, da zusätzlich zur Verarbeitungsverzögerung auch noch die Viskosität der Strukturpaste positiv beeinflußt wird.

Der nichtkristallisierende Sorbitsirup kann ggf. auch durch Ethylenglykol, Propylenglykol oder andere organische Lösungsmittel mit entsprechenden Eigenschaften ersetzt werden. So wurde gefunden, daß auch der Zusatz von 1-5 Gew.-% Ethylenglykol, bezogen auf die Gesamtpaste, für deren Verarbeitung in bestimmten Fällen vorteilhaft ist.

Gegebenenfalls kann auch der Zusatz von Hydrophobiermitteln zur Stukturpaste vorteilhaft sein, um der herzustellenden Strukturtapete in einem bestimmten Maße einen wasserabweisenden Charakter zu verleihen. Es hat sich gezeigt, daß dies durch Zusatz von 0,5-5 Gew.-% Paraffindispersion, bezogen auf die Gesamtpaste, erreicht werden kann.

Um das spezifische Gewicht der getrockneten Strukturpaste zu verringern bzw. um deren Strukturausbildung auch noch beim Trocknen zu verstärken, können der Strukturpaste in verhältnismäßig geringen Gewichtsmengen entsprechende Zusatzmittel zugegeben werden.

Um das spezifische Volumen der Strukturpaste noch während der Verarbeitung, insbesondere während des Trocknens vergrößern zu können, hat es sich als vorteilhaft erwiesen, der Gesamtpaste etwa 1-10 Gew.-% an sog. Mikroperlen zuzusetzen. Mikroperlen sind mit Treibmittel gefüllte Mikrokapseln mit einem Durchmesser von etwa 10-20 µm aus thermoplastischem Kunststoff, die sich bei 120-140°C auf das Mehrfache ihres Volumens ausdehnen. Diese Mikroperlen weisen beispielsweise Polymerhüllen auf der Basis von Methylmethacrylat oder auch einem Acrylnitril-Copolymer auf. Bevorzugt werden Ausführungsformen eingesetzt, die ein Expansionsverhältnis von etwa 20 aufweisen. Diese Mikroperlen übernehmen bei der erfindungsgemäßen Strukturpaste teilweise die Funktion des Treibmittels bei den herkömmlichen PVC-Plastisolen.

Darüber hinaus kann, zur Verringerung des spezifischen Gewichtes der Füllstoffe bzw. der Erhöhung des spezifischen Volumens der getrockneten Paste, der Gesamtpaste ein Anteil von etwa 1-5 Gew.-% sog. Mikrohohlkugeln zugesetzt werden. Es handelt sich dabei um expandierte Polymerhohlkugeln, in deren Oberfläche vorteilhafterweise anorganische Füllstoffe eingebettet sind. Der Durchmesser solcher Mikrohohlkugeln liegt vorzugsweise im Bereich von 10-80 µm, ihr spezifisches Volumen beträgt etwa 0,15 g/cm². Durch das Polymermaterial der Mikrokugelwände und der daran angelagerten anorganischen Füllstoffteilchen handelt es sich bei den Mikrohohlkugeln praktisch um einen gemischt organisch-anorganischen Füllstoff mit sehr hohem spezifischen Volumen.

Dem Fachmann ist geläufig, welche Viskosität eine Strukturpaste in etwa haben muß, um in einem bestimmten Auftragsverfahren verarbeitet werden zu können. Diese Viskosität kann bei der erfindungsgemäßen Paste durch entsprechende Wasserzugabe reguliert werden.

Selbstverständlich können der erfindungsgemäßen Strukturpaste zur Beeinflussung ihres äußeren Erscheinungsbildes beispielsweise auch noch Farbpigmente oder Farbstoffe zugegeben werden. Auch kann es für die Verarbeitung erforderlich sein, der Zusammensetzung in geringen Mengen Biozide oder einen Entschäumer zuzusetzen, falls sich dies als erforderlich erweisen sollte. Derartige Zusatzstoffe sind dem Fachmann geläufig.

Drei bevorzugte Zusammensetzungstypen der erfindungsgemäßen Strukturpaste in Gewichtsteilen sind wie folgt:
200-360 G.T. einer 50-55 %igen, weichmacherfreien EVA-Dispersion
5- 50 G.T. nicht kristallisierenden Sorbitsirup, Ethylenglykol und/oder Propylenglykol
10- 50 G.T. Mikroperlen
150-350 G.T. Al(OH)₃ und unverkleisterte Stärke und
5- 30 G.T. Wasser als Viskositätseinstellmittel;
oder:
200-350 G.T. einer 50 %igen, weichmacherfreien Acrylat-Styrol-Dispersion
10- 50 G.T. Mikroperlen
200-350 G.T. Al(OH)₃ und unverkleisterte Stärke und
5- 50 G.T. Wasser als Viskositätseinstellmittel;
oder:
200-300 G.T. einer 46 %igen, weichmacherfreien Acrylat-Dispersion
10- 70 G.T. Mikroperlen
250-350 G.T. Al(OH)₃ und unverkleisterte Stärke und
5- 70 G.T. Wasser als Viskositätseinstellmittel.

Diesen Zusammensetzungen können noch bis zu 30 Gewichtsteile Titandioxid vom Rutiltyp zugegeben werden. Die beiden letztgenannten Zusammensetzungen können ferner noch 5-50 G.T. nicht kristallisierenden Sorbitsirup, Ethylenglykol und/oder Propylenglykol enthalten. Außerdem können die Zusammensetzungen, wie oben erwähnt, noch durch Farbpigmente, Farbstoffe, Entschäumer, Biozide und ähnliche in geringen Mengen einzusetzende Zusatzmittel ergänzt werden.

Eine Strukturpaste der vorstehend wiedergegebenen Zusammensetzungen erfüllt alle an sie gestellten Anforderungen. Sie ist gut lichtbeständig, hoch waschbeständig, kratzfest, strapazierfähig, bleibt weich-flexibel und läßt sich darüber hinaus relativ leichtgewichtig ausführen. Sie ist ferner schwer entflammbar, wozu der relativ hohe Anteil an Aluminiumhydroxid beiträgt. Gegenüber den herkömmlichen PVC-Plastisolstrukturen weist sie die zusätzlichen Vorteile auf, daß sie PVC- und weichmacherfrei ist, eine gute Wasserdampfdurchlässigkeit aufweist und nikotinunempfindlich ist, und beim Verbrennen keine chlorhaltigen Verbindungen, insbesondere keine Salzsäuredämpfe abspaltet. Sie enthält ferner keine Lösung, die bei der Verarbeitung stören bzw. aufgefangen werden müßten und läßt sich bei verhältnismäßig niedrigen Temperaturen verfestigen, was insgesamt zu einer Energieeinsparung bei der Verarbeitung führt. Vor allem ist die erfindungsgemäße Strukturpaste auch biologisch leicht abbaubar.

### Ausführungsbeispiele

### Beispiel 1:

Es wurde eine Strukturpaste aus den im folgenden wiedergegebenen Mengen an Ausgangsstoffen zusammengemischt:
280 G.T. einer 50-55 %igen, weichmacherfreien EVA-Dispersion
45 G.T. eines nicht kristallisierenden Sorbitsirups
10 G.T. Wasser als Viskositätseinstellmittel
100 G.T. einer unverkleisterten Stärke
37,5 G.T. Mikroperlen
200 G.T. Al(OH)₃ mit einer
Korngrößenverteilung von 10-25 µm
20 G.T. TiO₂ vom Rutiltyp und
20 G.T. Paraffindispersion.

Die EVA-Dispersion, der nicht kristallisierende Sorbitsirup und das Wasser wurden in einem Rührbehälter vorgelegt und langsam verrührt. Während des Rührens wurden die unverkleisterte Stärke, die Mikroperlen, das Aluminiumhydroxid, das Titandioxid und die Paraffindispersion nacheinander langsam hinzugegeben. Nach etwa 30 min Rührzeit war die Paste gebrauchsfertig.

Auf ein Polymervlies als Substrat mit einem Flächengewicht von 50 g/m² und einer Breite von 110 cm wurde mit der Paste im Siebdruckverfahren bei einer Geschwindigkeit von 40 m/min eine Tapetenstruktur aufgetragen. Diese Struktur wurde bei etwa 150°C 35 sec lang getrocknet. Die so hergestellte Strukturtapete erfüllte alle an sie gestellten Anforderungen.

### Beispiel 2:

Es wurde eine Strukturpaste aus den im folgenden wiedergegebenen Mengen an Ausgangsstoffen zusammengemischt:
320 G.T. einer 50-55 %igen, weichmacherfreien EVA-Dispersion
10 G.T. eines nicht kristallisierenden Sorbitsirups
25 G.T. Wasser als Viskositätseinstellmittel
100 G.T. einer unverkleisterten Stärke
15 G.T. Mikroperlen
200 G.T. Al(OH)₃ mit einer
Korngrößenverteilung von 10-25 µm und
7,5 G.T. Paraffindispersion.

Die EVA-Dispersion, der nicht kristallisierende Sorbitsirup und das Wasser wurden in einem Rührbehälter vorgelegt und langsam verrührt. Während des Rührens wurden die unverkleisterte Stärke, die Mikroperlen, das Aluminiumhydroxid und die Paraffindispersion nacheinander langsam hinzugegeben. Nach etwa 30 min Rührzeit war die Paste gebrauchsfertig.

Auf ein Polymervlies als Substrat mit einem Flächengewicht von 50 g/m² und einer Breite von 110 cm wurde mit der Paste im Tiefdruckverfahren bei einer Geschwindigkeit von 40 m/min eine Tapetenstruktur aufgetragen. Diese Struktur wurde bei etwa 150°C 35 sec lang getrocknet. Die so hergestellte Strukturtapete erfüllte alle an sie gestellten Anforderungen.

### Beispiel 3:

Es wurde eine Strukturpaste aus den im folgenden wiedergegebenen Mengen an Ausgangsstoffen zusammengemischt:
265 G.T. einer 50-55 %igen, weichmacherfreien EVA-Dispersion
15 G.T. Wasser als Viskositätseinstellmittel
40 G.T. eines nicht kristallisierenden Sorbitsirups
35 G.T. Mikroperlen
3 G.T. Entschäumer
15 G.T. TiO₂ vom Rutiltyp
150 G.T. Al(OH)₃ mit einer
Korngrößenverteilung von 10-25 µm
15 G.T. Mikrohohlkugeln
50 G.T. einer unverkleisterten Stärke und
25 G.T. Paraffindispersion.

Die EVA-Dispersion, das Wasser und der nicht kristallisierende Sorbitsirup wurden in einem Rührbehälter vorgelegt und langsam verrührt. Während des Rührens wurden die Mikroperlen, der Entschäumer, das Titandioxid, das Aluminiumhydroxid, die Mikrohohlkugeln, die unverkleisterte Stärke und die Paraffindispersion nacheinander langsam hinzugegeben. Nach etwa 30 min Rührzeit war die Paste gebrauchsfertig.

Auf ein Polymervlies als Substrat mit einem Flächengewicht von 50 g/m² und einer Breite von 110 cm wurde mit der Paste im Tiefdruckverfahren bei einer Geschwindigkeit von 40 m/min eine Tapetenstruktur aufgetragen. Diese Struktur wurde bei etwa 150°C 35 sec lang getrocknet. Die so hergestellte Strukturtapete erfüllte alle an sie gestellten Anforderungen.

### Beispiel 4:

Es wurde eine Strukturpaste aus den im folgenden wiedergegebenen Mengen an Ausgangsstoffen zusammengemischt:
250 G.T. einer 50-55 %igen, weichmacherfreien EVA-Dispersion
13 G.T. Wasser als Viskositätseinstellmittel
35 G.T. Mikroperlen
40 G.T. eines nicht kristallisierenden Sorbitsirups
3 G.T. Entschäumer
15 G.T. TiO₂ vom Rutiltyp
200 G.T. einer unverkleisterten Stärke
100 G.T. Al(OH)₃ mit einer
Korngrößenverteilung von 10-25 µm und
25 G.T. Paraffindispersion.

Die EVA-Dispersion, das Wasser, die Mikroperlen und der nicht kristallisierende Sorbitsirup wurden in einem Rührbehälter vorgelegt und langsam verrührt. Während des Rührens wurden der Entschäumer, das Titandioxid, die unverkleisterte Stärke, das Aluminiumhydroxid und die Paraffindispersion nacheinander langsam hinzugegeben. Nach etwa 30 min Rührzeit war die Paste gebrauchsfertig.

Auf ein Polymervlies als Substrat mit einem Flächengewicht von 50 g/m² und einer Breite von 110 cm wurde mit der Paste im Tiefdruckverfahren bei einer Geschwindigkeit von 40 m/min eine Tapetenstruktur aufgetragen. Diese Struktur wurde bei etwa 150°C 35 sec lang getrocknet. Die so hergestellte Strukturtapete erfüllte alle an sie gestellten Anforderungen.

### Beispiel 5:

Es wurde eine Strukturpaste aus den im folgenden wiedergegebenen Mengen an Ausgangsstoffen zusammengemischt:
250 G.T. einer 50 %igen, weichmacherfreien Acrylat-Styrol-Dispersion
40 G.T. eines nicht kristallisierenden Sorbitsirups
12 G.T. Wasser als Viskositätseinstellmittel
3 G.T. Entschäumer
32 G.T. Mikroperlen
150 G.T. Al(OH)₃ mit einer
Korngrößenverteilung von 10-25 µm
125 G.T. einer unverkleisterten Stärke
15 G.T. TiO₂ vom Rutiltyp und
25 G.T. Paraffindispersion.

Die Acrylat-Styrol-Dispersion, der nicht kristallisierende Sorbitsirup und Wasser wurden in einem Rührbehälter vorgelegt und langsam verrührt. Während des Rührens wurden der Entschäumer, die Mikroperlen, das Aluminiumhydroxid, die unverkleisterte Stärke und das Titandioxid nacheinander langsam hinzugegeben. Nach etwa 30 min Rührzeit wurde die Paraffindispersion eingegeben und 5 min eingerührt. Danach war die Strukturpaste gebrauchsfertig.

Auf ein Tapetenpapier als Substrat mit einem Flächengewicht von 120 g/m² und einer Breite von 110 cm wurde mit der Paste im Rotations-Siebdruckverfahren bei einer Geschwindigkeit von 40 m/min eine Tapetenstruktur aufgetragen. Diese Struktur wurde bei etwa 150°C 35 sec lang getrocknet. Die so hergestellte Strukturtapete erfüllte alle an sie gestellten Anforderungen.

### Beispiel 6:

Es wurde eine Strukturpaste aus den im folgenden wiedergegebenen Mengen an Ausgangsstoffen zusammengemischt:
300 G.T. einer 50 %igen, weichmacherfreien Acrylat-Styrol-Dispersion
40 G.T. Wasser als Viskositätseinstellmittel
20 G.T. Mikroperlen
3 G.T. Entschäumer
15 G.T. TiO₂ vom Rutiltyp
125 G.T. einer unverkleisterten Stärke
150 G.T. Al(OH)₃ mit einer
Korngrößenverteilung von 10-25 µm und
5 G.T. Paraffindispersion.

Die Acrylat-Styrol-Dispersion, das Wasser und die Mikroperlen wurden in einem Rührbehälter vorgelegt und langsam verrührt. Während des Rührens wurden der Entschäumer, das Titandioxid, die unverkleisterte Stärke und das Aluminiumhydroxid nacheinander langsam hinzugegeben. Nach etwa 30 min Rührzeit wurde die Paraffindispersion eingegeben und 5 min eingerührt. Danach war die Strukturpaste gebrauchsfertig.

Auf ein Tapetenpapier als Substrat mit einem Flächengewicht von 120 g/m² und einer Breite von 110 cm wurde mit der Paste im Tiefdruckverfahren bei einer Geschwindigkeit von 40 m/min eine Tapetenstruktur aufgetragen. Diese Struktur wurde bei etwa 150°C 35 sec lang getrocknet. Die so hergestellte Strukturtapete erfüllte alle an sie gestellten Anforderungen.

### Beispiel 7:

Es wurde eine Strukturpaste aus den im folgenden wiedergegebenen Mengen an Ausgangsstoffen zusammengemischt:
270 G.T. einer 46 %igen, weichmacherfreien Acrylatdispersion
25 G.T. Wasser als Viskositätseinstellmittel
10 G.T. Ethylenglykol
3 G.T. Entschäumer
200 G.T. Al(OH)₃ mit einer
Korngrößenverteilung von 10-25 µm
65 G.T. Mikroperlen
100 G.T. einer unverkleisterten Stärke und
7,5 G.T. Paraffindispersion.

Die Acrylatdispersion, das Wasser, das Ethylenglykol und der Entschäumer wurden in einem Rührbehälter vorgelegt und langsam verrührt. Während des Rührens wurden das Aluminiumhydroxid, die Mikroperlen und die unverkleisterte Stärke nacheinander langsam hinzugegeben. Nach etwa 30 min Rührzeit wurde die Paraffindispersion eingegeben und 5 min eingerührt. Danach war die Strukturpaste gebrauchsfertig.

Auf ein Tapetenpapier als Substrat mit einem Flächengewicht von 120 g/m² und einer Breite von 110 cm wurde mit der Paste im Rotations-Siebdruckverfahren bei einer Geschwindigkeit von 40 m/min eine Tapetenstruktur aufgetragen. Diese Struktur wurde bei etwa 150°C 35 sec lang getrocknet. Die so hergestellte Strukturtapete erfüllte alle an sie gestellten Anforderungen.

### Beispiel 8:

Es wurde eine Strukturpaste aus den im folgenden wiedergegebenen Mengen an Ausgangsstoffen zusammengemischt:
250 G.T. einer 46 %igen, weichmacherfreien Acrylatdispersion
50 G.T. Wasser als Viskositätseinstellmittel
30 G.T. Mikroperlen
3 G.T. Entschäumer
10 G.T. TiO₂ vom Rutiltyp
150 G.T. einer unverkleisterten Stärke
150 G.T. Al(OH)₃ mit einer
Korngrößenverteilung von 10-25 µm und
25 G.T. Paraffindispersion.

Die Acrylatdispersion` das Wasser, die Mikroperlen und der Entschäumer wurden in einem Rührbehälter vorgelegt und langsam verrührt. Während des Rührens wurden das Titandioxid, die unverkleisterte Stärke und das Aluminiumhydroxid nacheinander langsam hinzugegeben. Nach etwa 30 min Rührzeit wurde die Paraffindispersion eingegeben und 5 min eingerührt. Danach war die Strukturpaste gebrauchsfertig.

Auf ein Tapetenpapier als Substrat mit einem Flächengewicht von 120 g/m² und einer Breite von 110 cm wurde mit der Paste im Tiefdruckverfahren bei einer Geschwindigkeit von 40 m/min eine Tapetenstruktur aufgetragen. Diese Struktur wurde bei etwa 150°C 35 sec lang getrocknet. Die so hergestellte Strukturtapete erfüllte alle an sie gestellten Anforderungen.

## Patentansprüche

1. Verfahren zum Herstellen dreidimensional oberflächenstrukturierter Beläge für Wand- und Bodenflächen, insbesondere von Strukturtapeten, bei dem eine Strukturpaste mittels geeigneter Auftragsverfahren in gewünschter Struktur auf eine Substratbahn aufgetragen und dann auf der Substratbahn verfestigt wird, dadurch gekennzeichnet, daß eine Strukturpaste verwendet wird, die unverkleisterte Stärke als organischen Füllstoff enthält.

2. Verfahren nach Anspruch 1, dadurch gekennzeichnet, daß eine Strukturpaste verwendet wird, deren Gesamtfüllstoffe einen Anteil von mindestens 10 Gew.-% unverkleisterter Stärke als organischen Füllstoff enthalten.

3. Verfahren nach Anspruch 1 oder 2, dadurch gekennzeichnet, daß als ein Verdünnungsmittel Wasser verwendet wird, mit dem die Strukturpaste auf eine geeignete Verarbeitungsviskosität eingestellt wird.

4. Verfahren nach mindestens einem der Ansprüche 1 bis 3, dadurch gekennzeichnet, daß das Auftragen der Strukturpaste auf die Substratbahn nach dem Rotationssiebdruckverfahren, dem Flach-Siebdruckverfahren, dem Rotations-Tiefdruckverfahren, dem Quetsch-Tiefdruckverfahren, dem Hochdruckverfahren, einem Streichverfahren oder einem Spritzverfahren erfolgt.

5. Verfahren nach mindestens einem der Ansprüche 1-4, dadurch gekennzeichnet, daß die Strukturpaste auf der Substratbahn durch Trocknen verfestigt wird.

6. Verfahren nach Anspruch 5, dadurch gekennzeichnet, daß das Trocknen bei Temperaturen von 40°C bis 200°C erfolgt.

7. Verfahren nach mindestens einem der Ansprüche 1-6, dadurch gekennzeichnet, daß die verfestigte Strukturpaste einer weiteren Oberflächenveredelung, insbesondere einem Bedrucken, Lackieren und/oder Beflocken unterworfen wird.

8. Strukturpaste für die Herstellung von dreidimensional oberflächenstrukturierten Belägen für Wand- und Bodenflächen, insbesondere von Strukturtapeten, dadurch gekennzeichnet, daß sie unverkleisterte Stärke als organischen Füllstoff enthält.

9. Strukturpaste nach Anspruch 8, dadurch gekennzeichnet, daß als unverkleisterte Stärke bevorzugt Kartoffelstärke verwendet wird.

10. Strukturpaste nach Anspruch 8, dadurch gekennzeichnet, daß als unverkleisterte Stärke Roggenstärke, Reisstärke und/oder Maisstärke verwendet wird.

11. Strukturpaste nach mindestens einem der Ansprüche 8 bis 10, dadurch gekennzeichnet, daß sie eine Polymerdispersion oder eine Kombination mehrerer Polymerdispersionen enthält.

12. Strukturpaste nach Anspruch 11, dadurch gekennzeichnet, daß die Polymerdispersion eine weichmacherfreie Dispersion eines Vinylacetat-Ethylen-Coploymerisats (EVA), eines Acrylat-Styrol-Copolymerisats oder eines Acrylat-Polymerisats ist.

13. Strukturpaste nach mindestens einem der Ansprüche 8 bis 12, dadurch gekennzeichnet, daß sie Al(OH)₃ als anorganischen Füllstoff enthält.

14. Strukturpaste nach mindestens einem der Ansprüche 8 bis 13, dadurch gekennzeichnet, daß die Füllstoffe bis zu 10 Gew.-% TiO₂ einschließen.

15. Strukturpaste nach mindestens einem der Ansprüche 8 bis 14, dadurch gekennzeichnet, daß sie auf 1 Gewichtsteil anorganische und/oder organische Füllstoffe 0,7 bis 2,0 Gewichtsteile einer 45-55 %igen Polymerdispersion enthält.

16. Strukturpaste nach mindestens einem der Ansprüche 8-15, dadurch gekennzeichnet, daß der Gesamtfüllstoff 20-70 Gew.-% unverkleisterte Stärke als organischen Füllstoff und als Restfüllstoff im wesentlichen Al(OH)₃ als anorganischen Füllstoff enthält.

17. Strukturpaste nach mindestens einem der Ansprüche 8 bis 16, dadurch gekennzeichnet, daß sie als Verarbeitungsverzögerungsittel nicht kristallisierenden Sorbitsirup, Ethylenglykol und/oder Propylenglykol enthält.

18. Strukturpaste nach Anspruch 17, dadurch gekennzeichnet, daß sie Sorbitsirup in einer Menge von 1-8 Gew.-%, bezogen auf die Gesamtpaste enthält.

19. Strukturpaste nach mindestens einem der Ansprüche 8-18, dadurch gekennzeichnet, daß sie als Expansionsmittel Mikroperlen enthält.

20. Strukturpaste nach Anspruch 19, dadurch gekennzeichnet, daß die Menge an Mikroperlen 1-10 Gew.-%, bezogen auf die Gesamtpaste beträgt.

21. Strukturpaste nach Anspruch 8, im wesentlichen enthaltend:
200-360 G.T. einer 50-55 %igen,
weichmacherfreien EVA-Dispersion
5- 50 G.T. nicht kristallisierenden Sorbitsirup, Ethylenglykol und/oder Propylenglykol
10- 50 G.T. Mikroperlen
150-350 G.T. Al(OH)₃ und unverkleisterte Stärke und
5- 30 G.T. Wasser als
Viskositätseinstellmittel.

22. Strukturpaste nach Anspruch 8, im wesentlichen enthaltend:
200-350 G.T. einer 50 %igen, weichmacherfreien Acrylat-Styrol-Dispersion
10- 50 G.T. Mikroperlen
200-350 G.T. Al(OH)₃ und unverkleisterte Stärke und
5- 50 G.T. Wasser als
Viskositätseinstellmittel.

23. Strukturpaste nach Anspruch 8, im wesentlichen enthaltend:
200-300 G.T. einer 46 %igen, weichmacherfreien Acrylat-Dispersion
10- 70 G.T. Mikroperlen
250-350 G.T. Al(OH)₃ und unverkleisterte Stärke und
5- 70 G.T. Wasser als
Viskositätseinstellmittel.

24. Strukturpaste nach Anspruch 22 und 23, dadurch gekennzeichnet, daß sie 5-50 G.T. nicht kristallisierenden Sorbitsirup, Ethylenglykol und/oder Propylenglykol enthält.

25. Strukturpaste nach mindestens einem der Ansprüche 21 bis 24, dadurch gekennzeichnet, daß sie 50-200 G.T. unverkleisterte Stärke enthält.

26. Strukturpaste nach mindestens einem der Ansprüche 21 bis 25, dadurch gekennzeichnet, daß sie 5-25 G.T. Paraffindispersion enthält.

27. Strukturpaste nach mindestens einem der Ansprüche 21 bis 26, dadurch gekennzeichnet, daß sie zusätzlich 5-30 Gewichtsteile TiO₂ vom Rutiltyp enthält.

28. Strukturpaste nach mindestens einem der Ansprüche 8-27, dadurch gekennzeichnet, daß sie zusätzlich Farbstoffe, Farbpigmente, Biozide und/oder Entschäumer enthält.

29. Verwendung von unverkleisterter Stärke, insbesondere Kartoffelstärke, als organischer Füllstoff in Strukturpasten zur Herstellung von Strukturtapeten und Wandbelägen.

30. Verwendung von unverkleisterter Stärke, insbesondere Kartoffelstärke, als organischer Füllstoff in Strukturpasten zum Beschichten von Druckträgern.
